# EUROPEAN PATENT SPECIFICATION

(11) **EP 1 877 862 B1**
(45) Date of publication and mention of the grant of the patent: **18.02.2009**
(21) Application number: 06733022.5
(22) Date of filing: 24.04.2006
(51) Int. Cl.: G03C 1/775, G03C 1/795, G03C 1/76, G03C 1/95, G03G 5/10, B41M 5/40, B41M 5/00, B32B 29/00, B32B 27/20, B32B 27/32

(54) **MULTI-LAYER RECORDING SUPPORT**
MEHRSCHICHT-AUFZEICHNUNGS-SUPPORT
SUPPORT D'ENREGISTREMENT MULTI-COUCHES

(30) Priority: 25.04.2005 EP 05075972
(43) Date of publication of application: 16.01.2008
(73) Proprietor: Fuji Film Manufacturing Europe B.V., 5047 TK Tilburg (NL)
(72) Inventor: GILLISSEN, Hubert Maria Joseph, NL-5056 JW Berkel-enschot (NL); MEIJLINK, Maarten Constant Gerlach Marie, NL-5172 CG Kaatsheuvel (NL)
(74) Representative: Hatzmann, Martin
(86) International application number: PCT/NL2006/000216
(87) International publication number: WO 2006/115400

(56) References cited:
- US-A1- 2001 021 442

## Description

### Field of the invention

This invention relates to a support material, in particular a resin coated support material for use in recording applications. The invention further relates to a recording medium comprising such a support material.

### Background of the invention

In general a support material used in recording media comprises a substrate on which at least one resin layer is supplied. On top of this resin layer a receiving medium is applied depending on the recording method used, e.g. an emulsion layer for (conventional) photography applications or an ink receiving layer for inkjet applications or a layer for thermal or electro-photographical paper application.

Typically, recording media for imaging methods, and in particular recording media for photographic paper, are produced by using a melt-extrusion coating method or co-extrusion method. In (co-)extrusion coating, molten polymer layer(s) is (are) extruded through a slot die at elevated temperatures exceeding 270 °C. While in molten state, the polymer layer(s) is (are) drawn through the nip of two rollers together with the substrate to be coated. One of these rollers, the chill roller, is cooled in order to solidify the polymer layer(s). The other roller, the nip roller, which is usually provided with a layer of a compressible material on its circumference, applies pressure to effect the adhesion of the substrate and the polymer layer(s).

An important aspect of the support is the resin surface appearance, which should be smooth and exhibiting a high gloss. Further it is important that the resin surface of the support does not have too many crater defects, also named pits, which may be caused by air entrapment by the rotation of the chill roll, upon melt-extrusion coating of resin on the substrate. When the number of pits increases, the outer appearance of the support is damaged and the quality of the recording media prepared using such a support deteriorates.

The number of pits increases when using higher line-speeds in extrusion coating and therefore it has been difficult to increase the production speed and productivity in the manufacturing of supports for recording media.

The number of pits also increases with a reduction of the total weight of the resin layers of the support. Therefore, it has been difficult to reduce the costs of the supports for recording media. The number of crater defects of a resin coated substrate can be reduced by increasing the melt temperature of the resin layers above the temperature, that would be needed to assure the adhesion of the resin layer(s) with the substrate. This is generally not preferred because of its associated risks for generating more defects, for instance, because it may give rise to die drool. These defects lead to a deterioration of the appearance of the support and require a production stop to remedy them.

In the prior art various solutions for above mentioned crater defect problems are proposed. EP-A-0 285 146 describes a method of reducing the number of crater defects at high extrusion line speeds such as 200 m/min, by replacing the air on the chill roller with a gas which can escape more readily through the extruded resin film.

JP-A-11 352 638 describes another method at high extrusion line speeds such as 200 m/min in which a resin film coming out of an extruder is passed between a nip and a cooling roller along with the base material and where the temperature of the resin film in the nip is increased.

EP-A-1 130 460 describes another method at high extrusion line speeds such as 300 m/min in which a paper substrate is heated prior to extrusion coating with polymer resin layer(s). Also other applications propose methods for the reduction of craters with a major disadvantage in the technical complexity or potential risk for damage to production equipment, damage of the proposed system or increased number of production steps in producing the support. For example, in JP-A-11 352 637 a process is described in which after the first nip, new pressing with hot roller(s) is used at least one time. In US-A-4 994 357 a process is described in which upon extrusion coating the molten resin layer(s) are passed between a chill roller and a back-up roller under a linear pressure up to 200 kg/cm and in JP-A- 59 198 451 a process is described in which the support is prepared by double consecutive extrusion coating.

US-A-2001/021442 describes a recording medium having an upper polyethylene layer comprising 20 wt.% metallocene polyethylene with a density of 0.7-0.9 g/cm³ for improving adherence property to the different thermoplastic polymers and photographic emulsion. This document is silent with respect to the reduction of crater formation.

In the art of providing support materials for recording media there remains a need for low costs and high speed production of the media, whereby the amount of craters defects on the support remains at a sufficiently low level.

### Summary of the invention

It is an object of the present invention to provide a support for recording media with good surface properties, in particular a low amount of crater defects.

It is a further object of the present invention to provide a support for recording media that can be produced at very high line speed during melt extrusion-coating, without sacrifice to the surface properties.

It is a further object of the present invention to provide a support for recording media having a low total thickness of polymer resin expressed as weight of resin per surface area, which can be produced at high extrusion speed, whereby good surface properties are maintained.

It is another object of the present invention to provide a support for recording media at relatively low resin melt temperature with superior surface properties, i.e. a minimum amount of crater defects at high line speed during extrusion coating.

It is another object of the present invention to provide a process for producing a support for recording media at relatively low nip pressure, while obtaining a support with superior surface properties, i.e. a minimum amount of crater defects at high line speed during extrusion coating.

It has now been found that the objects underlying the invention are at least in part achieved by providing a support for a recording medium comprising a substrate having a topside and a backside, wherein at least the topside is provided with a multilayer structure, wherein the outermost resin layer, which is most distant from the substrate, comprises at least one low density polyethylene polymer with a density of less than 0.90 g/cm³ and said outermost resin layer has a coating weight of at least 0.2 g/m² and less than 2 g/m².

### Detailed description

In a first aspect, the present invention provides a support comprising a substrate having a topside and a backside, wherein at least the topside is provided with at least two resin layers, wherein the outermost layer, which is most distant from the substrate, comprises at least 50 wt.% of one polyethylene polymer with a density less than 0.90 g/cm³ and the outermost layer is characterised by a weight of at least 0.2 g/m² but smaller than 2.0 g/m². The term "polyethylene polymer" as used herein refers to a polyethylene homopolymer or to a polyethylene copolymer. Thus, it is highly preferred that the low density polyethylene polymer is the major constituent of the outermost layer of the topside.

As used herein, the topside is in particular the side that is intended to be provided with a receiving medium, such as a recording layer in case the support is used for producing a recording medium.

The invention is based on the discovery that replacing the commonly applied high density (i.e. more than 0.90 g/cm³) polyethylene of the outermost layer at least in part, preferably for 50 wt. % or more, with a low density (i.e. less than 0.90 g/cm³) polyethylene polymer, leads to a reduction in the occurrence of crater defects.

For a very low occurrence of crater defects the density is preferably 0.875 g/cm³ or less. For practical reasons the density is preferably at least 0.85 g/cm³. The polyethylene with a density of less than 0.90 g/cm³, in particular less than 0.875 g/cm³, is preferably a metallocene polyethylene. Suitable metallocene polyethylenes are in particular copolymers of ethylene with alphaolefins having 3 to about 14 carbon atoms, like for example 1-propylene,1-butene, 1-hexene or 1-octene, prepared by using metallocene catalysts.

In one embodiment of this invention, the outermost resin layer comprises (apart from at least 50 wt.% of the polyethylene polymer with a density less than 0.90 g/cm³) one or more other polyolefins. Preferred examples of such polyolefins are polymers comprising one or more alpha-olefin monomer residues containing at least three carbon atoms; (mixtures of) copolymers of ethylene and of alpha-olefin monomers containing at least three carbon atoms; and (mixtures of) polyethylenes with a density of more than 0.90, in particular between 0.90 and 0.97 g/cm³. The outermost layer may comprise up to 50 wt.% of these olefins compared to the total weight of the polymers used in the outermost layer. The exact amount of these polyolefins is preferably such that the average density of all polymers in the outermost layer is less than 0.90 g/cm³.

It was found that when the weight percentage of polyethylenes with densities between 0.90 and 0.97 g/cm³ in the outermost layer is increased, the occurrence of crater defects increases again somewhat. However as positive side effect this weight increase of polyethylenes with a density between 0.90 and 0.97 g/cm³ will result in an easier chill roll release of the co-extruded coating. Therefore as a trade-off between crater defects and this chill-roll releasing property the outermost layer preferably comprises at most up to 25 wt. % of these relative higher density polyethylenes.

As indicated above, the coating weight of the outermost layer is preferably less than 2.0 g/m². It has been found in particular that when the support is used for example as a support for a photographic printing paper or the like, the presence of an outer layer of 2.0 g/m² or more may lead to an undesirable reduction in sharpness of the image on the support. Also for economical reason it is not preferred to use high coating weights. Therefore, in a preferred embodiment of the present invention, the outermost layer of the support is applied with a very low weight in the range of 0.2 g/m² to 1.75 g/m². More preferably the weight of the outermost layer is 1.5 g/m² or less. In the most preferred embodiment of this invention the weight is 1.0 g/m² or less.

In the present invention the outermost resin layer may comprise one or more chill-roll releasing agents, like metalstearates, fluoropolymers, polyalcohols, polyethylene glycol or polypropylene glycol or combinations thereof, in order to improve the release from the chill-roll. The outermost layer of the support of the present invention can be coloured with one or more white opacifying pigments, *e*.*g*. for improvement of image sharpness in the case that the support is used for instance as a support for a photographic printing paper or for improvement of the whiteness or opacity of the support. This white opacifying pigment may be selected from any of the white pigments described in the art like anatase type titanium dioxide, rutile titanium dioxide, zinc oxide, zinc sulphide, lithopone and the like, or mixtures of any of these. In the most preferred embodiment of the invention the white pigment in the outermost resin layer of the support is an anatase type or rutile type titanium dioxide or a mixture of these types of pigments. Preferably the particle size of the anatase type or rutile type titanium dioxide is between 0.1 µm and 0.4 µm. Preferably the concentration of the white pigment in the outermost layer of the support does not exceed 20 wt.% based on the total weight of the outermost layer. Higher amounts may give rise to die drool and these defects will lead to deterioration of the appearance of the support and require a production stop to remedy them. If present, the amount of white pigment is at least 5%.

The outermost resin layer of the support of the present invention may be provided with one or more substances, such as known additives for resin coated substrates. In particular the outermost layer may contain additional (small) quantities of one ore more coloured dyes or pigments and/or blueing agents, e.g. ultramarine blue and/or violet, cobalt blue, phosphoric oxide cobalt, quinacridone pigments and mixtures of these. One or more optical brighteners, preferably bis-benzoxazole type optical brighteners may be present. One or more antioxidants, *e*.*g*. hindered phenol type anti-oxidants, phosphite type anti-oxidants, lactone type anti-oxidants and mixtures of these, may be present. Further the outermost layer may comprise one or more additives selected from the group consisting of anti-static agents, UV-stabilisers and light stabilisers, *e*.*g*. hindered amine light stabilizers, nickel chelates, substitutes benzophenones or benzotriazole.

Adhesion of the outermost resin layer to the recording layer (in order to provide the recording medium) can be improved by conventional surface treatment methods known in the art *e*.*g*. corona treatment, plasma treatment, flame treatment, heat treatment, chemical priming or combinations of surface treatment methods.

The second resin layer of a support of the present invention usually has a coating weight of between 5 g/m² and 50 g/m², and preferably between 9 g/m² and 25 g/m². The type of resin in the second resin layer of the invention can be chosen from any type of (extrusion coating) resin known in the art, preferably the resin in the second layer of the invention is a polyolefin or olefin copolymer or a mixture of olefinic polymers or co-polymers. In a preferred embodiment of the invention the type of resin used in the second resin layer is a polyethylene resin or a mixture of different polyethylene resins. In the most preferred embodiment of the invention the type of resin used in the second layer is a low density polyethylene resin or a mixture of different low density polyethylene resins. Typical values for density of these low density polyethylene resins are in between 0.915 and 0.930 g/cm³.

The resins or resin mixtures in the various layers of the present invention can be chosen independently from each other depending on the intended properties of the end product. The values of the melt flow index of the resins or resin mixtures in the second layer of the present invention are chosen in such a way that under the production conditions of the present invention there will be no or an acceptable level of interfacial instability between this second layer and the layer(s) adjacent to this second layer and that there is no or an acceptable level of layer encapsulation. The second resin layer of the present invention may further comprise one or more white opacifying pigments to enhance the whiteness and opacity of the support, or in the case this support is used as a support for a photographic paper to increase the sharpness of the image. This white opacifying pigment can be selected from any of the white pigments described in the art like anatase type titanium dioxide, rutile titanium dioxide, zinc oxide, zinc sulphide, lithopone and the like.

In a particularly preferred embodiment of the invention the type of white pigment in the second layer of the support of the present invention comprises anatase type or rutile type titanium dioxide or mixture of these pigments. Preferably, the particle size of the anatase type or rutile type titanium dioxide is between 0.1 µm and 0.4 µm and the concentration of the white pigment in the second layer of the support does not exceed 35 wt.%, based on the total weight of the second layer. The anatase type titanium dioxide is preferably used in order to obtain a very good whiteness. The pigment types in the outermost layer and in the second layer may be chosen independently from each other. For example, titanium dioxide of the anatase type may used in one of the layers and titanium dioxide of the rutile type may be used in another layer.

Optionally, the second resin layer of the support of the present invention may contain additionally one or more pigments like nacreous pigments and/or (small quantities of) one or more coloured dyes and/or blueing agents, *e*.*g*. ultramarine blue and/or violet, cobalt blue, phosphoric oxide cobalt, quinacridone pigments and mixtures of these. Further one or more additives from the group consisting of optical brighteners, most preferably bis-benzoxazole type optical brighteners (because these exhibit less tendency to bleed); antioxidants, *e*.*g*. hindered phenol type anti-oxidants, phosphite type anti-oxidants, lactone type anti-oxidants and mixtures of these; anti-static agents *e*.*g*. semi-conductive metal oxide particles or inorganic platelet shaped materials *e*.*g*. mica coated with an anti-static agent, *e*.*g*. semi-conductive metal oxide; UV-stabilisers and/or light stabilisers, *e*.*g*. hindered amine light stabilisers, nickel chelates, substitutes benzophenones or benzotriazole, and other additives for resin coated recording media may be selected.

Additionally, the second resin layer of the support of the present invention may contain one or more adhesion promoting additives, e.g. as known in the art, in order to improve the adhesion of the second layer with the outermost resin layer, to improve the adhesion of the second resin layer towards a possible third resin coating layer, or, when the second resin layer is the lowermost resin layer which is in contact with the substrate, to improve the adhesion towards this substrate (see *e*.*g*. US-A-5 466 519 for examples of suitable additives). If desired, the adhesion of the lowermost resin-layer to the substrate can be improved by given the lowermost resin-layer an ozone-melt treatment.

Alternatively, there may be applied a tie layer as described in the art to promote adhesion between the second resin layer and the outermost resin layer, between the second resin layer and a possible third resin coating layer, or, when the second resin layer is the lowermost resin layer which is in contact with the substrate, to improve the adhesion of this second resin layer with this substrate. The tie layer may comprise one or more materials selected from anhydride modified polyolefins such as anhydride modified polypropylene, anhydride modified polyethylene, anhydride modified ethylene vinyl acetate, anhydride modified ethyl methyl acrylate, anhydride modified ethyl acrylic acid, and copolymers and/or other materials like co- and terpolymers modified for adhesion promotion with ethylene or polypropylene as one of the monomer components, and acrylic acid, acryl ester, methacrylic acid, methacryl ester, maleic anhydride, vinylacetate, ionomers and mixtures thereof.

If desired, the adhesion of the resin to the substrate can be improved by giving the tie layer, for instance when the tie layer is the lowermost resin-layer, an ozone-melt treatment.

The melt temperature of the second resin layer of the present invention when utilized as the lowermost resin layer which is in contact with the substrate can be chosen at a sufficiently high level to promote the adhesion of this second layer to the substrate without the need of adhesion promoting additives and/or tie layers. For this in case the second layer is a polyethylene layer, the melt temperature should usually be at least 270 °C.

The application of a third layer below the second resin layer of the present invention may be advantageous in order to prevent the generation of die lip stripes in the case that the second layer of the present invention comprises a high concentration of titanium dioxide or other pigments. The third layer of the present invention may have a coating weight between 1 g/m² and 50 g/m², and preferably between 2 g/m² and 25 g/m².

In a preferred embodiment of the invention, the type of resin used in the third layer is a polyolefin type or an olefin copolymer or a mixture of various olefinic polymer type resins. In a particularly preferred embodiment of the invention the type of resin used in the third layer is a low density polyethylene resin or a mixture of different low density polyethylene resins. The resins or resin mixtures of this third layer can be chosen independently from the resins of the other layers and may be the same or different depending on the intended properties of the end product. The values of the melt flow index of the resins or resin mixtures in the third layer of the present invention is chosen in such a way that under the production conditions of the present invention there will be no or an acceptable level of interfacial instability between this third layer and the resin layer(s) adjacent to this third layer and in such a way that there is no encapsulation or at least an acceptable level of layer encapsulation.

The third layer of the present invention further preferably comprises a white opacifying pigment or a mixture of white opacifying pigments, most preferably an anatase type or rutile type titanium dioxide or mixture of these pigments with a particle size between 0.1 µm and 0.4 µm. The concentration of the white pigment in the third layer preferably does not exceed 20 wt.% based on the total weight of this third layer and most preferably does not exceed 15 wt.%. Again here a higher amount may result in die drool and related defects as explained in the outermost layer description. The pigment types in the third layer and in the second resin layer may be chosen independently from each other. So, titanium dioxide of the anatase type may be used in one of the layers and titanium dioxide of the rutile type may be used in the another layer. Optionally, the third layer may comprise additional (small) quantities of one or more coloured dyes or pigments and/or blueing agents, *e*.*g*. ultramarine blue and/or violet, cobalt blue, phosphoric oxide cobalt, quinacridone pigments and mixtures of these. In addition one or more additives may be selected from the group consisting of optical brighteners, most preferably bis-benzoxazole type optical brighteners; antioxidants, *e*.*g*. hindered phenol type anti-oxidants, phosphite type anti-oxidants, lactone type anti-oxidants and mixtures of these; anti-static agents *e*.g. semi-conductive metal oxide particles; UV-stabilisers and/or light stabilisers, *e*.*g*. hindered amine light stabilisers, nickel chelates, substituted benzophenones or benzotriazole and other substances used as known additives for resin coated recording media.

Additionally, the third resin layer of the support of the present invention may comprise adhesion promoting additives as known in the art in order to improve the adhesion of the third layer with the second adjacent resin layer, to improve the adhesion of the third resin layer towards the substrate or when the lower-most resin is a tie layer to improve the adhesion from the third resin-layer to this tie layer. Examples of these adhesion promoting additives are, but not limited to those alone, disclosed in US-A-5 466 519.

In order to promote the adhesion between the third layer and the adjacent second layer and/or the substrate, the usage of a tie layer above and/or below a third layer and/or the usage of an adhesion promoting additive in the third layer is possible. The tie layer can comprise materials as *e*.*g*. anhydride modified polyolefins such as anhydride modified polypropylene, anhydride modified polyethylene, anhydride modified ethylene vinyl acetate, anhydride modified ethyl methyl acrylate, anhydride modified ethyl acrylic acid, and copolymers and/or other materials like co- and terpolymers modified for adhesion promotion with ethylene or polypropylene as one of the monomer components, and acrylic acid, acryl ester, methacrylic acid, methacryl ester, maleic anhydride, vinylacetate, ionomers and mixtures thereof.

Alternatively, or if desired in addition, the melt temperature of a third resin layer of the present invention, when utilized as the lowermost resin layer which is in contact with the substrate, can be chosen at a sufficiently high level to promote the adhesion of this third layer to the substrate without the need of expensive adhesion promoting additives and/or tie layers. For this in case the third layer ia a polyethylene layer, the melt temperature should be at least 270 °C.

If desired, the adhesion of the resin to the substrate can be improved by given the lowermost resin-layer an ozone-melt treatment.

The support of the present invention, comprising a substrate having a topside and a backside, can also be provided on its backside with at least one resin layer and/or at least one other coating layer depending on the properties to be achieved like for instance waterproofing, anti-static, anti-curling, antiblocking, anti-slip, splice strength, and/or the ability to receive and retain prints (*e*.*g*. bar codes or other indicia containing useful information). In the case the intended use of the support of the present invention is as the base for a photographic printing paper or a base for an inkjet paper, this back side is preferably extrusion coated with polyethylene resin(s) and most preferably a mixture of low density polyethylene and high density polyethylene. On top of this polymer layer an anti-static coating, an anti-sticking coating and so on may be provided.

The substrate of the support of the present invention can be chosen from any substrate known in the art, like a raw paper base comprising high quality natural pulp such as a photographic paper base, a pigment coated paper base, a synthetic paper base or a polymer sheet base. The preferred substrate in the present invention is a raw paper base containing high quality natural pulp or a pigment coated paper base with a weight of 50 to 350 g/m², and most preferably with a base weight of 100 to 250 g/m². When using a pigment coated paper base as the substrate of the recording medium of the present invention, the average surface roughness (Rₐ) which is determined at the top-side of the substrate surface which receives the resin layers in accordance with the present invention, can be higher than those of the prior art, for instance those specified in EP-A-1 126 081, while still obtaining a surface without pits or crater defects. Thus, the use of high pigment coating layer weights and/or the use of multiple coating layers and/or the use of supercalendering in the manufacturing of the pigment coated paper substrate can be avoided, which greatly reduces the manufacturing costs of said pigment coated paper substrate. The prior art teaches that an average surface roughness Ra below 1 µm is needed for a paper base as substrate in order to prevent the occurrence of crater like defects upon applying a polymer resin layer. The present inventors found that when using a pigment coated paper base as substrate, the average surface roughness of the side of the pigment coated paper which receives the resin layers can be more than 1 µm. Preferably, the roughness is less than 2.0 µm and more preferred less than 1.5 µm and most preferred below 1.0 µm.

When a raw paper base is used as a substrate in the present invention , the average surface roughness of the substrate can also be more than 1, but is preferably less than 1.5 and more preferred less than 1.0 µm. In case a pigment coated paper base is used as substrate in the present invention then the total dry coating weight of the pigment coating which is applied as an aqueous dispersion of binder and pigments on the paper base is preferably present in less than 60 g/m² and most preferably in less than 30 g/m². Even lower total coating weights of the pigment coating layer are possible with the present invention because of the superior ability to reduce the number of crater defects. The whiteness of the pigment coated substrate can be adjusted by addition of white pigments and/or blue dye and/or optical brighteners in the pigmented coating. Its gloss can be adjusted to the required level by calendering and/or super calendering and by selection of the appropriate pigment type(s) and particle size and size distribution. Typical pigments which can be used in the pigment coated paper substrate for the present invention are calcium carbonate, kaolin, barium sulphate, titanium oxide, clay, magnesium-aluminium silicate, aluminium oxide hydroxide, styrene-acrylic copolymers, plastic hollow sphere pigments and combinations thereof. The particle size of the pigments is not particularly limited, but it will be appreciated by those known in the art, that pigments with smaller particle size distributions can have benefits in providing adhesion or gloss. Pigments in which at least 70% of the particles have a size smaller than 1 µm and at least 40% have a size between 0.35 and 0.8 µm may be advantageously used.

Typical binders which can be used in the pigment coated paper substrate for the present invention include conventional styrene-butadiene latex, highly modified styrene butadiene latex, styrene butadiene acetonitrile latex, polyvinyl acetate latex, methyl methacrylate-butadiene latex, styrene acrylate latex, polyacrylate latex, polyvinyl alcohol, starch and other polysaccharide, and combinations thereof.

When using the recording medium comprising a support of the present invention, which has as substrate a pigment coated paper base as a photographic printing paper an additional advantage offered by the pigment coated paper is that the amount of the titanium oxide in the resin layers of the present invention can be decreased because the pigment coating effectively hides the paper part of the substrate. Thus, the manufacturing costs can be decreased additionally without loosing image sharpness compared to traditional photographic printing papers known in the art.

Depending on the use of the support, the layer structure of the support according to the present invention can be applied on the topside only or on the topside and also the backside of the substrate.

If necessary, the front surface, and optionally also the back surface of the substrate of the support of the present invention is subjected to an activation treatment before the melt-extrusion process. The treatment may comprise a corona treatment and/or a flame treatment and/or ozone treatment and/or plasma treatment and/or plasma deposition treatment and/or a heat treatment and/or a chemical priming.

The support of the present invention can be manufactured by (tandem) extrusion coating techniques or consecutive extrusion coating techniques as described in the art. Most preferably the support of the present invention is manufactured by a co-extrusion technique in which all resin layers of the present invention and if required tie layers are applied to the substrate at the same time using feed block techniques or multi manifold die techniques. This greatly increases the economy of the manufacturing of the support. In the (co)extrusion coating line, the molten resin which is extruded from the die can furthermore be treated by ozone in order to improve the adhesion between the resin and the substrate. In order to even further improve the adhesion between the resin and the substrate, the melt temperature of the resin layer which is extruded from the die is at least 270 °C.

The preferred speeds for the co-extrusion process for the manufacturing of the support of the present invention may be up to 200 or 300 or 450 m/min or even more than 600 m/min, which increases the economy of the manufacturing of the support even more. It is also possible to reduce the total amount of extrusion coated resin, while keeping the same amount of pits. It is for example possible to reduce the amount of topside coated resins from 30 g/m² to 20 g/m² by changing over from an outermost polyethylene layer with a density higher than 0.90 g/cm to an outermost layer comprising a polyethylene with a density less than 0.90 g/cm³ and keeping the same amount of pits.

A preferred nip pressure of the manufacturing of the support of the present invention, where the nip is in between a chill roll and a pressure roll with a pressure function, is below 370 N/cm and more preferred below 320 N/cm and most preferred below 280 N/cm. The surface structure of the chill roll used in the manufacturing of the support of the present invention can be any glossy structure, including a mirror glossy type surface because of the many advantages of the present invention, however, most preferred is a glossy fine matte surface.

A preferred web temperature in the manufacturing of the support of the present invention from the chill roll is between 20 and 65 °C.

The invention further relates to a recording medium, comprising a support as described herein and a receiving medium. The receiving medium is usually provided at the side of the outermost resin layer that is remote from the substrate. The receiving medium may be a photographically active layer, such as an emulsion layer for photography, an ink receiving layer (such as from inkjet applications) a recording layer for thermal paper application or a recording layer for electro-photographical paper application. The recording medium may be manufactured in a manner known in the art.

The invention further relates to the use of a polyethylene homopolymer or copolymer with a density less than 0.90 g/cm³ in an outermost resin layer with a coating weight of at least 0.2 g/m² and less than 2 g/m² on the topside of a support which is provided with at least two resin layers to reduce crater defect formation in a support material for an recording medium.

The present invention will be elucidated below in further detail with reference to the examples, but the present invention will not be limited thereto. Unless otherwise indicated, all parts, percents, ratios and the like are by weight.

### Examples

The following abbreviations are used for the different resins which were investigated: LDPE = low density polyethylene; LLDPE = linear low density polyethylene; PE = polyethylene.

All experiments were run on a co-extrusion line equipped with two 4½" (11.43 cm) and one 2½" (6.35 cm) extruders, feed-block and coat-hanger die. The substrates were always corona treated prior to extrusion coating by in-line corona treatment stations. All experiments were performed using glossy fine matte chill rollers.

The corona treatment activated photographic base paper (167 g/m²) was co-extruded at line speeds 350 and 400 m/min with three resin layers with a 325 °C melt temperature and 350 N/cm nip pressure, an outermost resin layer of 1 g/m², 12.5 g/m² for the middle layer containing LDPE and 25 % (wt/wt) anatase titanium dioxide and further ultramarine pigments and optical brightener and a 16.5 g/m² lowermost layer adjacent to the base paper containing LDPE and 5% (wt/wt) anatase titanium dioxide and furthermore ultramarine pigments.

The ultramarine pigments used in the examples are a mixture of ultramarine violet and ultramarine blue in the ratio of 2.75 : 1.70. The optical brightener used in the examples is a bis-benzoxazole substituted stilbene type optical brightener. Pigments and optical brighteners were applied from master batches with low density polyethylene as carrier resin.

In the examples the amount and size of the crater defects were measured by microscopy combined with image analysis software provided by Zeiss.

Number of pits is counted and divided into two size classes: 1) < 300 µm²; and 2) > 300 µm². Especially the latter one is the most important for the characterization of crater defects and quality analysis because these defects are visible.

| | |
|---|---|
| Roughness (Rₐ) method: | according to ISO 4287-1997 |
| cut-off wave-length (λc): | 0.8 mm |
| sample measuring length: | 5.6 mm |
| apparatus/type: | Mahr Perthometer/ M3 |

Table 1 summarizes the resins which were used in the outermost layer and their densities and the result of number counts of crater defects.

In all listed examples the only difference is, that the outermost layer composition is changed from resin-composition.

In all examples the outermost layer weight is 1 g/m².

**TABLE 1**

| | | 350 m/min | | 400 m/min | |
|---|---|---|---|---|---|
| PE outermost layer | Density | < 300 µm² | > 300 µm² | < 300 µm² | > 300 µm² |
| | (g/m³) | (counts) | (counts) | (counts) | (counts) |
| LLDPE Stamylex^{™} 1046F | 0.914 | 283 | 150 | 418 | 223 |
| Metallocene PE Exact^{™} 8210 | 0.882 | 230 | 132 | 401 | 195 |
| Metallocene PE Engage^{™} 8130 | 0.870 | 106 | 51 | 160 | 83 |

This data table clearly demonstrates that the number of counts and crater defects are reduced when the polyethylene density in the outermost layer is reduced. Furthermore it is clearly visible that it is possible to produce at higher line speeds for PE's with densities below 0.90 g/m³. For example lower amount of counts (>300 crater µm²) and crater defects (i.e. 211) are estimated at 600 m/min line speed by extrapolation, assuming a linear relationship for the counts increase versus line speed increase for a Metallocene PE Engage^{™} 8130 compared to that of the reference LLDPE Stamylex^{™} at 400 m/min (i.e. 223).

## Claims

1. Support for a recording medium comprising a substrate having a topside and a backside, wherein at least the topside is provided with at least two resin layers, wherein the outermost resin layer comprises 50 wt.% or more of at least one polyethylene homopolymer or polyethylene copolymer with a density less than 0.90 g/cm³ and said outermost resin layer has a coating weight of at least 0.2 g/m² and less than 2 g/m².

2. Support according to claim 1, wherein the coating weight is 1.75 g/m² or less, preferably 1.5 g/m² or less and most preferred 1.0 g/m² or less.

3. Support according to claim 1 or 2, wherein said polyethylene with a density less than 0.90 g/cm³ is a metallocene polyethylene.

4. Support according to claim 1 to 3, wherein said outermost layer comprises at least one polyolefin selected from the group consisting of polymers of an alpha-olefin monomer comprising at least 3 carbon atoms and copolymers of ethylene and alpha-olefin monomers having at least 3 carbon atoms and of polyethylenes with a density between 0.90 and 0.97 g/cm³.

5. Support according to claim 1 to 4, wherein the polyethylene with a density of less than 0.90 g/cm³ is present in a concentration of at least 75 wt.% based on the total weight of the polymers used in the outermost layer.

6. Support according to any of the preceding claims, wherein said outermost layer further comprises at least one polyethylene with a density between 0.90 and 0.97 g/cm³, preferably in a concentration not exceeding 25 wt. %, based on the total weight of the polymers used in the outermost layer.

7. Support according to any of the preceding claims, wherein said outermost layer further comprises at least one chill-release improving agent, in particular at least one chill-release improving agent selected from the group consisting of metal-stearates, fluoropolymers, polyalcohols, polyethylene glycol and polypropylene glycol.

8. Support according to any of the preceding claims, wherein said outermost layer comprises a one or more opacifying and/or coloured pigments.

9. Support according to any of the preceding claims, wherein the second resin layer comprises a polyethylene resin.

10. Support according to any of the preceding claims, wherein said second layer has a coating weight between 5 g/m² and 50 g/m², and preferably between 9 g/m² and 25 g/m².

11. Support according to claim 10, wherein said second layer comprises one or more opacifying and/or coloured pigments.

12. Support according to any of the preceding claims, wherein at least a third resin layer is provided in between the outermost layer and the substrate and which comprises preferably a polyethylene resin or mixtures of polyethylene resins.

13. Support according to claim 12, wherein said third layer has a coating weight between 1 g/m² and 50 g/m², and preferably between 2 g/m² and 25 g/m².

14. Support according to claim 12 or 13, wherein said third layer further comprises a one or more opacifying and/or coloured pigments.

15. Support according to any of the preceding claims, wherein said substrate is a raw paper base, a pigment coated paper base, a synthetic paper base or a polymer sheet base.

16. Support according to any of the preceding claims, wherein said substrate is a pigment coated paper with an average surface roughness (Rₐ) on the side of the pigment coated paper, which receives the resin layers, of less than 2.0 µm more preferably of less than 1.5 µm and most preferably below 1.0 µm.

17. Support according to any of the preceding claims, wherein said substrate is a paper base with an average surface roughness (Ra) on the side which receives the resin layers, of less than 1.5 µm, more preferably of less than 1.0 µm.

18. Method for manufacturing a support according to any of the previous claims wherein said support is manufactured using a co-extrusion coating technique.

19. Method according to claim 18, wherein at least two resin layers are co-extruded simultaneously via a feedblock or a multi manifold die at elevated temperature on a moving substrate having a certain line speed, said resin layers and substrate coming together in a nip having a nip pressure, where the nip is in between a chill roll having a chilling function and a pressure roll having a pressure function and where the support is removed from the chill roll with a lower temperature than that of the polymer resin melt.

20. Method for manufacturing a support according to claim 18 or 19, wherein said support is manufactured with a line speed of at least 200 m/min.

21. Method for manufacturing a support according to any of the claims 18 to 20, wherein said support is manufactured with a melt temperature of at least 270 °C.

22. Method for manufacturing a support according to any of the claims 18 to 21, wherein the nip pressure is below 370 N/cm, preferably below 320 N/cm and most preferably below 280 N/cm.

23. Method according to any of the claims 18 to 22, wherein said support is taken of from the chill roll with a web-temperature between 20 and 65 °C.

24. Recording medium, comprising a support which is provided at the topside with at least two resin layers according to any of the claims 1 to 17 and a receiving medium.

25. Use of a polyethylene homopolymer or copolymer with a density less than 0.90 g/cm³ in an outermost resin layer, wherein said layer has a coating weight of at least 0.2 g/m² and less than 2 g/m² on the topside of a support, wherein said support comprises at least two resin layers, and wherein said polyethylene homopolymer or copolymer forms the majority by weight of said outermost resin layer.

## Patentansprüche

1. Träger für ein Aufzeichnungsmedium, der ein Substrat mit einer Oberseite und einer Unterseite umfasst, wobei wenigstens die Oberseite mit wenigstens zwei Harzschichten versehen ist, die äußerste Harzschicht 50 Gew.-% oder mehr wenigstens eines Polyethylen-Homopolymers oder Polyethylen-Copolymers mit einer Dichte von weniger als 0,90 g/cm³ umfasst und die äußerste Harzschicht ein Beschichtungsgewicht von wenigstens 0,2 g/m² und weniger als 2 g/m² aufweist.

2. Träger nach Anspruch 1, wobei das Beschichtungsgewicht 1,75 g/m² oder weniger, vorzugsweise 1,5 g/m² oder weniger und am besten 1,0 g/m² oder weniger beträgt.

3. Träger nach Anspruch 1 oder 2, wobei das Polyethylen mit einer Dichte von weniger als 0,90 g/m² ein Metallocen-Polyethylen ist.

4. Träger nach Anspruch 1 bis 3, wobei die äußerste Schicht wenigstens ein Polyolefin umfasst, das aus der Gruppe ausgewählt wird, die aus Polymeren eines Alpha-Olefinmonomers, das wenigstens 3 Kohlenstoffatome umfasst, und Copolymeren von Ethylen und Alpha-Olefin-Monomeren mit wenigstens 3 Kohlenstoffatomen sowie aus Polyethylenen mit einer Dichte zwischen 0,90 und 0,97 g/m³ besteht.

5. Träger nach Anspruch 1 bis 4, wobei das Polyethylen mit einer Dichte von weniger als 0,90 g/m³ in einer Konzentration von wenigstens 75 Gew.-%, basierend auf dem Gesamtgewicht der Polymere, vorhanden ist, die in der äußerten Schicht eingesetzt werden.

6. Träger nach einem der vorangehenden Ansprüche, wobei die äußerste Schicht des Weiteren wenigstens ein Polyethylen mit einer Dichte zwischen 0,90 und 0,97 g/m³, vorzugsweise in einer Konzentration von nicht mehr als 25 Gew.-%, basierend auf dem Gesamtgewicht der Polymere, umfasst, die in der äußersten Schicht eingesetzt werden.

7. Träger nach einem der vorangehenden Ansprüche, wobei die äußerste Schicht des Weiteren wenigstens ein Kühlwalzen-Ablösungsverbesserungsmittel, insbesondere wenigstens ein Kühlwalzen-Ablösungsverbesserungsmittel umfasst, das aus der Gruppe ausgewählt wird, die aus Metallstearaten, Fluorpolymeren, Polyalkoholen, Polyethylenglycol und Polypropylenglycol besteht.

8. Träger nach einem der vorangehenden Ansprüche, wobei die äußerste Schicht ein oder mehrere deckende/s und/oder farbige/s Pigment/e umfasst.

9. Träger nach einem der vorangehenden Ansprüche, wobei die zweite Harzschicht ein Polyethylenharz umfasst.

10. Träger nach einem der vorangehenden Ansprüche, wobei die zweite Schicht ein Beschichtungsgewicht zwischen 5 g/m² und 50 g/m² und vorzugsweise zwischen 9 g/m² und 25 g/m² hat.

11. Träger nach Anspruch 10, wobei die zweite Schicht ein oder mehrere deckende/s und/oder farbige/s Pigment/e umfasst.

12. Träger nach einem der vorangehenden Ansprüche, wobei wenigstens eine dritte Harzschicht zwischen der äußerten Schicht und dem Substrat vorhanden ist und vorzugsweise eine Polyethylenharz oder Gemische aus Polyethylenharzen umfasst.

13. Träger nach Anspruch 12, wobei die dritte Schicht ein Beschichtungsgewicht zwischen 1 g/m² und 50 g/m² und vorzugsweise zwischen 2 g/m² und 25 g/m² hat.

14. Träger nach Anspruch 12 oder 13, wobei die dritte Schicht des Weiteren ein oder mehrere deckende/s und/oder farbige/s Pigment/e umfasst.

15. Träger nach einem der vorangehenden Ansprüche, wobei das Substrat eine Rohpapierunterlage, eine pigmentbeschichtete Papierunterlage, eine synthetische Papierunterlage oder eine Polymerfolienunterlage ist.

16. Träger nach einem der vorangehenden Ansprüche, wobei das Substrat ein pigmentbeschichtetes Papier mit einer durchschnittlichen Obeflächenrauigkeit (Rₐ) auf der Seite des pigmentbeschichteten Papiers, die die Harzschichten aufnimmt, von weniger als 2,0 µm, besser weniger als 1,5 µm und am besten unter 1,0 µm, ist.

17. Träger nach einem der vorangehenden Ansprüche, wobei das Substrat eine Papierunterlage mit einer durchschnittlichen Oberflächenrauigkeit (Rₐ) auf der Seite, die die Harzschichten aufnimmt, von weniger als 1,5 µm, besser weniger als 1,0 µm, ist.

18. Verfahren zum Herstellen eines Trägers nach einem der vorangehenden Ansprüche, wobei der Träger unter Verwendung eines Coextrusions-Beschichtungsverfahrens hergestellt wird.

19. Verfahren nach Anspruch 18, wobei wenigstens zwei Harzschichten gleichseitig über einen Feedblock oder eine Mehrfachverteilerdüse bei erhöhter Temperatur auf ein sich bewegendes Substrat mit einer bestimmten Bandgeschwindigkeit (line speed) coextrudiert werden, die Harzschichten und das Substrat in einem Spalt mit einem Spaltdruck zusammenkommen, sich der Spalt zwischen einer Kühlwalze mit einer Kühlfunktion und einer Druckwalze mit einer Druckfunktion befindet und der Träger mit einer niedrigeren Temperatur als der der Polymerharzschmelze von der Kühlwalze entfernt wird.

20. Verfahren zum Herstellen eines Trägers nach Anspruch 18 oder 19, wobei der Träger mit einer Bandgeschwindigkeit von wenigstens 200 m/min hergestellt wird.

21. Verfahren zum Herstellen eines Trägers nach einem der Ansprüche 18 bis 20, wobei der Träger mit einer Schmelzetemperatur von wenigstens 270 °C hergestellt wird.

22. Verfahren zum Herstellen eines Trägers nach einem der Ansprüche 18 bis 21, wobei der Spaltdruck unter 370 N/cm, vorzugsweise unter 320 N/cm und am Besten unter 280 N/cm liegt.

23. Verfahren nach einem der Ansprüche 18 bis 22, wobei der Träger mit einer Bahntemperatur zwischen 20 und 65 °C von der Kühlwalze abgenommen wird.

24. Aufzeichnungsmedium, das einen Träger umfasst, der an der Oberseite mit wenigstens zwei Harzschichten nach einem der Ansprüche 1 bis 17 und einem Aufnahmemedium versehen ist.

25. Einsatz eines Polyethylen-Homopolymers oder -Copolymers mit einer Dichte von weniger als 0,90 g/m³ in einer äußersten Harzschicht, wobei die Schicht ein Beschichtungsgewicht von wenigstens 0,2 g/m² und weniger als 2 g/m² an der Oberseite eines Trägers hat, der Träger wenigstens zwei Harzschichten umfasst und das Poylethylen-Homopolymer oder -Copolymer bezüglich des Gewichtes den Großteil der äußersten Harzschicht bildet.

## Revendications

1. Support d'enregistrement comprenant un substrat ayant une face supérieure et une face inférieure, dans lequel au moins la face supérieure est pourvue d'au moins deux couches de résine, dans lequel la couche de résine la plus externe comprend 50 % en poids ou plus d'au moins un homopolymère de polyéthylène ou d'un copolymère de polyéthylène ayant une masse volumique inférieure à 0,90 g/cm³ et ladite couche de résine la plus externe possède un poids de revêtement d'au moins 0,2 g/m² et inférieur à 2 g/m².

2. Support selon la revendication 1, dans lequel le poids de revêtement est de 1,75 g/m² ou moins, de préférence 1,5 g/m² ou moins et de manière préférée entre toutes de 1,0 g/m² ou moins.

3. Support selon la revendication 1 ou 2, dans lequel ledit polyéthylène ayant une masse volumique inférieure à 0,90 g/cm³ est un polyéthylène de métallocène.

4. Support selon les revendications 1 à 3, dans lequel ladite couche la plus externe comprend au moins une polyoléfine choisie dans le groupe constitué par les polymères d'un monomère d'alpha-oléfine contenant au moins 8 atomes de carbone et les copolymères d'éthylène et de monomères d'alpha-oléfine contenant au moins 3 atomes de carbone et de polyéthylènes ayant une masse volumique entre 0,90 g/cm³ et 0,97 g/cm³.

5. Support selon les revendications 1 à 4, dans lequel le polyéthylène ayant une masse volumique inférieure à 0,90 g/cm³ est présent en une concentration d'au moins 75 % en poids sur la base du poids total des polymères utilisés dans la couche la plus externe.

6. Support selon l'une quelconque des revendications précédentes, dans lequel ladite couche la plus externe comprend en outre au moins un polyéthylène ayant une masse volumique entre 0,90 g/cm³ et 0,97 g/cm³, de préférence en une concentration ne dépassant pas 25 % en poids sur la base du poids total des polymères utilisés dans la couche la plus externe.

7. Support selon l'une quelconque des revendications précédentes, dans lequel ladite couche la plus externe comprend en outre au moins un agent améliorant la libération à froid, en particulier au moins un agent améliorant la libération à froid choisi dans le groupe constitué par les stéarates métalliques, les fluoropolymères, les polyalcools, le polyéthylène glycol et le polypropylène glycol.

8. Support selon l'une quelconque des revendications précédentes, dans lequel ladite couche la plus externe comprend un ou plusieurs pigments opacifiants et/ou colorés.

9. Support selon l'une quelconque des revendications précédentes, dans lequel la seconde couche de résine comprend une résine de polyéthylène.

10. Support selon l'une quelconque des revendications précédentes, dans lequel ladite seconde couche de résine possède un poids de revêtement entre 5 g/m² et 50 g/m², et de préférence entre 9 g/ m² et 25 g/m².

11. Support selon la revendication 10, dans lequel ladite seconde couche comprend un ou plusieurs pigments opacifiants et/ou colorés.

12. Support selon l'une quelconque des revendications précédentes, dans lequel au moins une troisième couche de résine est fournie entre la couche la plus externe et le substrat et comprend de préférence une résine de polyéthylène ou des mélanges de résines de polyéthylène.

13. Support selon la revendication 12, dans lequel ladite troisième couche possède un poids de revêtement entre 1 g/m² et 50 g/m², et de préférence entre 2 g/m² et 25 g/m².

14. Support selon la revendication 12 ou 13, dans lequel ladite troisième couche comprend en outre un ou plusieurs pigments opacifiants et/ou colorés.

15. Support selon l'une quelconque des revendications précédentes, dans lequel ledit substrat est une base de papier brut, une base de papier recouvert d'un pigment, une base de papier synthétique ou une base de feuille polymère.

16. Support selon l'une quelconque des revendications précédentes, dans lequel ledit substrat est un papier recouvert d'un pigment ayant une rugosité moyenne de surface (Rₐ) sur le côté du papier recouvert d'un pigment qui reçoit les couches de résine inférieure à 2,0 µm, et de manière davantage préférée inférieure à 1,5 µm et de manière préférée entre toutes inférieure à 1,0 µm.

17. Support selon l'une quelconque des revendications précédentes, dans lequel ledit substrat est une base de papier ayant une rugosité moyenne de surface (Rₐ) sur le côté qui reçoit les couches de résine inférieure à 1,5 µm, et de manière davantage préférée inférieure à 1,0 µm.

18. Méthode de fabrication d'un support selon l'une quelconque des revendications précédentes, dans laquelle ledit support est fabriqué au moyen d'une technique de revêtement par coextrusion.

19. Méthode selon la revendication 18, dans laquelle au moins deux couches de résine sont coextrudées simultanément via un bloc d'alimentation ou une filière à multiples distributeurs à température élevée sur un substrat en déplacement ayant une certaine vitesse de ligne, lesdites couches de résine et ledit substrat venant ensemble dans un espacement ayant une pression de laminage, où l'espacement se trouve entre un rouleau refroidisseur ayant une fonction de refroidissement et un rouleau presseur ayant une fonction de pression et où le support est retiré du rouleau refroidisseur avec une température plus basse que celle de la résine polymère fondue.

20. Méthode de fabrication d'un support selon la revendication 18 ou 19, dans laquelle ledit support est fabriqué avec une vitesse de ligne d'au moins 200 m/minute.

21. Méthode de fabrication d'un support selon l'une quelconque des revendications 18 à 20, dans laquelle ledit support est fabriqué avec une température de fusion d'au moins 270 °C.

22. Méthode de fabrication d'un support selon l'une quelconque des revendications 18 à 21, dans laquelle la pression de laminage est inférieure à 370 N/cm, de préférence inférieure à 320 N/cm et de manière préférée entre toutes inférieure à 280 N/cm.

23. Méthode selon l'une quelconque des revendications 18 à 22, dans laquelle ledit support est enlevé du rouleau refroidisseur avec une température de feuille entre 20°C et 65°C.

24. Support d'enregistrement, comprenant un support qui est fourni au niveau de la face supérieure avec au moins deux couches de résine selon l'une quelconque des revendications 1 à 17 et un milieu récepteur.

25. Utilisation d'un homopolymère ou copolymère de polyéthylène ayant une masse volumique inférieure à 0,90 g/cm³ dans une couche de résine la plus externe, dans laquelle ladite couche possède un poids de revêtement d'au moins 0,2 g/m² et inférieur à 2 g/m² sur la face supérieure d'un support, dans laquelle ledit support comprend au moins deux couches de résine, et dans laquelle ledit homopolymère ou copolymère de polyéthylène forme la majeure partie en poids de ladite couche de résine la plus externe.
